(19) Europäisches Patentamt
European Patent Office
Office européen des brevets

(11) **EP 2 271 006 A1**

(12) **EUROPEAN PATENT APPLICATION**

(43) Date of publication:
**05.01.2011 Bulletin 2011/01**

(51) Int Cl.:
*H04B 10/158* (2006.01)     *H04L 25/03* (2006.01)

(21) Application number: **09163524.3**

(22) Date of filing: **23.06.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br><br>(71) Applicant: **University College Cork-National University of Ireland, Cork**<br>**Cork (IE)**<br><br>(72) Inventors:<br>• **Zhao, Jian**<br>  **Cork City (IE)** | • **McCarthy, Mary**<br>  **Mallow, Co Cork (IE)**<br><br>(74) Representative: **Lucey, Michael**<br>  **PURDYLUCEY**<br>  **Intellectual Property**<br>  **Suite 138-139**<br>  **The Chapel Building**<br>  **Mary's Abbey**<br>  **Dublin 7 (IE)** |

(54)     **Electronic dispersion compensation system and method**

(57)     The invention provides a system and method for an optical communication network to compensate impairments in the network to optimize system parameters, using electronic dispersion compensation (EDC) comprising a circuit for receiving two signals, representing amplitude and instantaneous frequency, and performing a full-field reconstruction of the signals. A dispersive transmission line circuit provides a coarse CD compensation of the reconstructed signals. An EDC circuit provides a fine impairment compensation of said reconstructed signals, and adaptively optimize system parameters. The system and method of the invention achieves low-cost long-distance transmission, up to 2000km, while maintaining the fast-adaptive compensation capability and provide a method for transparent long-haul and metro-optical networks.

Figure 7

**Description**

**Field of the Invention**

The invention relates to a communication system and method. In particular the invention relates to an electronic dispersion compensation (EDC) system and method, for use in an optical communication system.

**Background to the Invention**

Metro and long-haul transmission at high data rate is critical to the substantial expansion of broadband services, especially with the growth of services such as YouTube and BBC iPlayer. However, as the capacity of optical transmission systems grows, optical impairments resulting in signal degradation become prominent and require careful compensation. Among them, chromatic dispersion (CD) is the most important impairment which can limit the transmission reach to less than 100km for 10Gbit/s OOK signal and 6km at 40Gbit/s. The commercial optical networks employ in-line dispersion compensation fibre (DCF), which is bulky and expensive with significant power attenuation. It's length has to be manually adjusted to achieve proper CD compensation with the result that link provisioning is expensive and time consumption.
Electronic dispersion compensation (EDC) has attracted much interest recently for extending reach in legacy multimode optical fiber as well as in metro and long-haul optical transmission systems. Its advantages compared to the optical compensation method include:

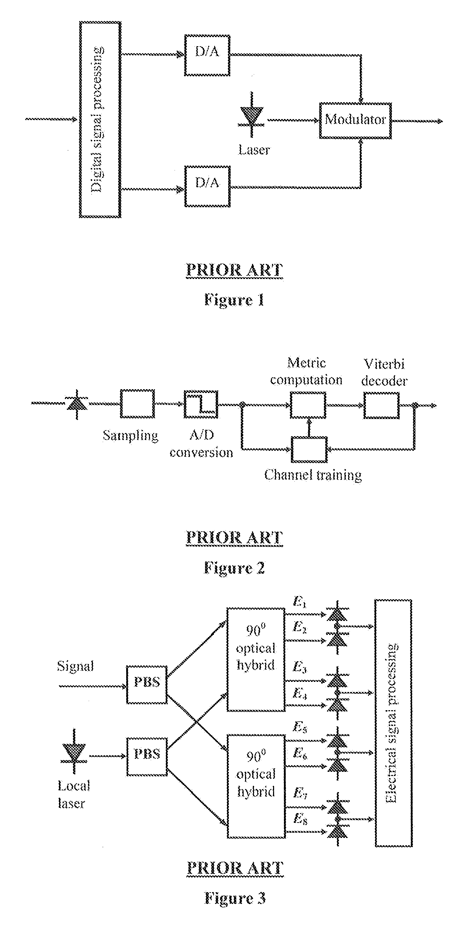

- Reduced costs by eliminating the need for DCF modules including the cost of DCFs and the associated cost for compensating the loss from the DCFs.
- Simplification of the deployment and configuration
- Flexible and adaptive compensation required in dynamic optical networks.
- Easy for integration in transmitter and receiver
  EDC can be categorized into transmitter-side EDC and receiver-side EDC. Transmitter-side EDC, as shown in Fig. 1, generates pre-distorted optical pulse shape for signal modulation according to the amount of dispersion to be compensated. In such a technique, the pre-distortion parameters are preset according to the information given by the CD for each link. However, the optimum setting often changes due to different routing paths and waveform changes arising from fibre nonlinearity, transmitter chirps etc. Because the errors are detected at the receiver, the feedback time for adaptive compensation is unacceptable due to the round-trip time. Transmitter side EDC is disclosed in more detail in US Patent No. US7,382,984, McNicol et al and in a paper publication entitled "Electronic dispersion compensation", in *Proc. Optical Fiber Communication Conference* (OFC) 2006, paper OWK1. McGhan et al.

In contrast, receiver-side EDC, which can adapt quickly to changes in link conditions, is of particular value for future transparent optical networks where the re-configurability of the add-nodes and drop-nodes causes the transmission paths to vary. It can also be used for compensating polarization mode dispersion (PMD). PMD is an impairment which would severely degrade system performance for transmission distance beyond several hundred kilometres at 10Gbit/s. Different from CD, PMD which occurs as a result of birefringence in optical fibre depends on stress and vibration as well as random changes in the state of light polarization, and may dynamically change as time in a scale of milliseconds (ms). Up to now, 40Gbit/s feed forward equalizer (FFE) and decision feedback equalizer (DFE), and 10Gbit/s maximum likelihood sequence estimation (MLSE) have been fabricated, for example as shown in US Patent No. US7,184,478, Popescu et al, or a paper published by M. Nakamura, K. Murata, and M. Tokumitsu, "Advances in 40G electronic equalizers", Proc. Optical Fiber Communication Conference (OFC) 2007, paper OThN6, or a paper published by H. Jiang, and R. Saunders, "Advances in SiGe ICs for 40Gb/s signal equalizers", Proc. Optical Fiber Communication Conference (OFC) 2006, paper OTuE1, or a paper published by A. Farbert, S. Langenbach, N. Stojanovic, C. Dorschky, T. Kupfer, C. Schulien, J.-P. Elbers, H. Wernz, H. Griesser, and C. Glingener, "Performance of a 10.7 Gb/s receiver with digital equaliser using maximum likelihood sequence estimation", European Conference on Optical Communication (ECOC), Post-deadline Th4.1.5, 2004.
However, these conventional EDCs are based on direct detection (DD EDC) and their performance is limited due to loss of the signal phase information. In addition, the transformation of linear optical impairments into nonlinear impairments after square-law detection significantly increases the operational complexity of the DD EDC. For example, DD MLSE, regarded as an optimized DD EDC as shown in Fig. 2, can extend the transmission reach to ~200km at 4 states. It has been theoretically predicted that it can achieve 700km SMF transmission but at the problem of increased electronic processing complexity requiring 8192 Viterbi processor states, as disclosed in a published paper by G. Bosco and P. Poggiolini, "Long-distance effectiveness of MLSE IMDD receivers", IEEE Photo. Technol. Lett. 18, 1037-1039 (2006).

EDC based on coherent detection can access both the intensity and the phase, thus exhibiting better performance compared to DD EDC, as shown in US Patent No. US7,266,310, Savory et al and a paper published by M. G. Taylor, "Coherent detection for optical communications using digital signal processing", in Proc. Optical Fiber Communication Conference (OFC) 2007, paper OMP1. However, these systems require a complicated optical implementation due to phase and polarization tracking between the local oscillator and the signal, as shown in Fig. 3.

Recently, a novel cost-effective EDC receiver was proposed, which accesses the intensity and instantaneous frequency information simultaneously, using a single asymmetric Mach-Zehnder interferometer (AMZI). The overall idea was covered by the previous PCT Patent Publication number WO2006131904, assigned to the assignee of the present invention, as shown in Fig. 4 and Fig. 5. Compared to DD EDC where only optical intensity information is available, this method exhibits better compensation performance due to the recovered phase information. It also features better cost effectiveness compared to coherent detection based EDC by avoiding complicated polarization and phase tracking.

However, the two-input one-output electrical signal processing module is required. It is clear that proper design of the electrical signal processing module for impairment compensation is essential to take full use of the extracted optical information.

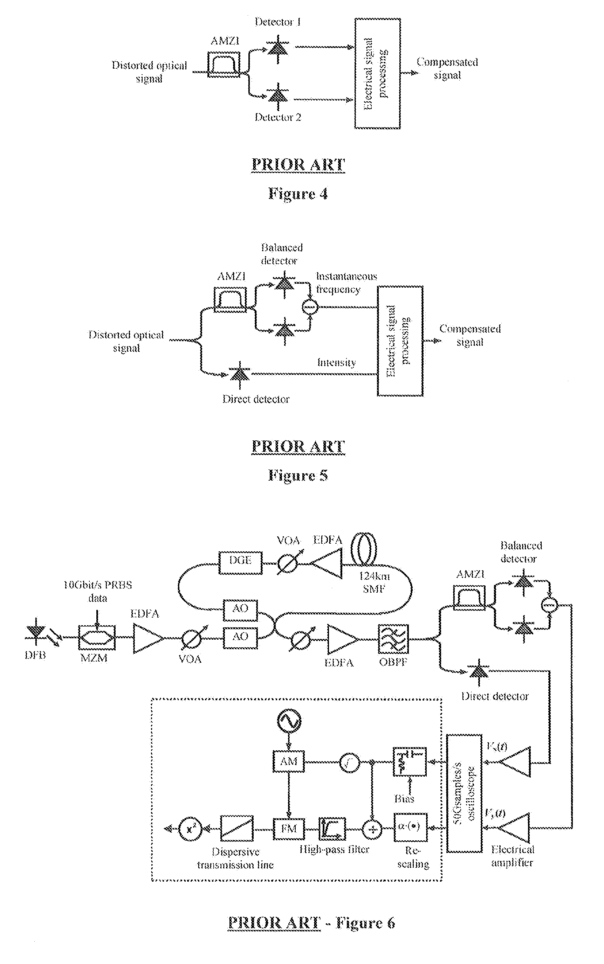

Previously, the recovered intensity and instantaneous frequency information was used to reconstruct the full optical field, which allows for full-field CD compensation in the electrical domain using a fixed dispersive transmission line, as shown in Fig. 6. Owing to the benefits from the recovery of the knowledge of phase information, full-field EDC using a dispersive transmission line was experimentally demonstrated to recover a 10Gbit/s OOK signal after transmission through a 500km of BT Ireland's field-installed SMF between Tyndall National Institute, Cork City, Ireland and Clonakilty, Co. Cork, Ireland without using either in-line compensation or coherent detection, as disclosed in a paper J. Zhao, M.E. McCarthy, P. Gunning, A.D. Ellis, "Mitigation of pattern sensitivity in full-field electronic dispersion compensation", IEEE Photo. Technol. Lett., 21, 48-50, 2009. Fig. 6 shows the experimental setup of technology demonstration. For commercial applications, the real-time oscilloscope can be replaced by ADCs while the signal processing module described in the dotted box is implemented using analogue devices or digital devices such as application specific integrated circuit (ASIC) or field programmable gate array (FPGA).

Although the dispersive transmission line method is cost effective, a problem is that it has to be matched to particular CD encountered in the transmission and is inflexible for adaptive CD compensation in transparent optical networks. If the transmission paths change because of path re-routing or a path failure, a different dispersive transmission line must be used. Furthermore, dispersive transmission line has no capability for compensation of PMD, which would dynamically change and play an important role for transmission beyond 500km. As a result, dispersive transmission line may not extend the transmission reach to thousand kilometres even when CD can be fully compensated. In addition, dispersive transmission line cannot mitigate the impairment arising from filtering at the transmitter, add- and drop-nodes, and receiver, e.g. narrow-band filtering by means of WDM multiplexers and de-multiplexers. Narrow band filtering is essential in wavelength-division multiplexed (WDM) optical transmission systems to avoid WDM crosstalk and achieve high spectral efficiency. Finally, the dispersive transmission line method lacks automatic optimization capability for system parameters or the ability to equalize the impairments arising from improper setting of these parameters. For example, in the previous experiments, the scaling factor for compensating gain imbalance between the detected two signals, the bias added to the intensity, sampling phase etc were manually optimized, which was time consuming and non-optimal. Since some of these parameters vary as time (e.g. sampling phase) and some are changed when the CD value changes or the path is re-routed (e.g. scaling factor), self-adaptive optimization for these parameters is highly desirable.

There is therefore a need to provide a system and method for overcoming the above mentioned problems.

## Summary of the Invention

According to the present invention there is provided, as set out in the appended claims, system, for an optical communication network to compensate impairments in the network to optimize system parameters, using electronic dispersion compensation (EDC) comprising:

means for receiving two signals, representing amplitude and instantaneous frequency, and performing a full-field reconstruction of said signals;
a dispersive transmission line circuit to provide a coarse CD compensation of said reconstructed signals; and
an EDC circuit to provide a fine impairment compensation of said reconstructed signals, and adaptively optimize system parameters.

The present invention accesses the intensity and the instantaneous frequency of the optical field using a single asymmetric Mach-Zehnder interferometer in direct-detection optical systems. This information is used to reconstruct the full optical field. The parameters in the full-field reconstruction are self-adaptively optimized or controlled by the fast-adaptive EDC to achieve optimal performance. The invention also provides the circuit implementation of field calculation and phase estimation in a way for easy implementation and optimum performance. The recovered optical field allows full-field CD compensation by using a fixed, but cost-effective, dispersive transmission line to compensate the CD coarsely. Following the coarse compensation the fast-adaptive full-field EDC is self-adaptively tuned to perform the fine-trimming of CD and other impairments, e.g. dynamically changed PMD, narrowband filtering, varied sampling phase etc. This structure is effective due to the fact that most ISI in the transmission arises from CD that has prior known channel characteristics $\exp(-j\beta_2\omega^2 L/2)$ and is relatively static compared to for example PMD (except the cases of path re-routing). On the other hand, PMD and sampling phase are dynamically changed, and the characteristics of filtering in the channel and gain imbalance between the two detected paths are usually unknown (also depending on path re-routing), but cause ISI with memory length much less than that of CD. As a result, the required memory length or the complexity of the fast-adaptive EDC can be greatly reduced. The proposed method of the invention can therefore achieve low-cost long-distance transmission up to 2000km while maintaining the fast-adaptive compensation capability and provide a method for transparent long-haul and metro optical networks.

In one embodiment the system provides a circuit to provide full optical-field reconstruction with adaptively controlled or compensated parameters.

In one embodiment the invention provides means for using a dispersive transmission line in direct-detection optical systems to provide the coarse CD compensation of said signals. It will be appreciated that this can be implemented using analogue devices or digital devices. Note that the dispersive transmission line may also have a certain limited tuning capability provided that there is rough information about the CD value. For example, several analogue dispersive transmission lines with different dispersion values (e.g. values for CD of 500km, 1000km, and 1500km SMF) can be placed in parallel, and a switch is used to select the most suitable one (e.g. dispersive transmission line with dispersion value equal to CD of 1000km SMF) is selected if the estimated fiber length is 850km. It may also be implemented using fast Fourier transform or a filter with the transfer function of $\exp(j\beta_2\omega^2 L/2)$, where $\beta_2 L$ is the approximated dispersion value. The dispersion value may be estimated using prior knowledge or by an additional CD monitor module. Note that dispersive transmission line has a fixed transfer function of $\exp(j\beta_2\omega^2 L/2)$ with $\beta_2 L$ roughly estimated by the prior information, so it does not need complicated adaptive algorithm for channel estimation.

In one embodiment the fast-adaptive full-field EDC is self-adaptively tuned out to perform fine-trimming of CD and other transmission impairments in said signals. Fast-adaptive full-field EDC can be full-field MLSE or full-field FFE/DFE, and would exhibit better compensation performance compared to conventional DD EDC due to the recovered phase information. Adaptive full-field EDC is not limited to a specific impairment (e.g. CD with the fixed transfer function of $\exp(-j\beta_2\omega^2 L/2)$), and can compensate impairments regardless of their sources without prior-known channel characteristics by using fast-adaptive algorithms. Therefore, it can compensate finely not only residual CD, but also PMD, narrowband filtering and impairments arising from non-optimal system parameters including sampling phase misalignment, gain imbalance etc. Its complexity can be significantly relaxed due to reduced ISI memory length by the dispersive transmission line.

In one embodiment, the invention provides an adaptive algorithm to control the system parameter to compensate the gain imbalance between the intensity and the instantaneous frequency paths. Equivalently, the algorithm can be incorporated in the adaptive full-field EDC such that this impairment can be equalized in the adaptive EDC, instead of been mitigated by controlling the system parameter using the feedback information from the adaptive EDC.

In one embodiment, the hybrid full-field EDC is much more robust to the misalignment of the sampling phase compared to the dispersive transmission line method. In practice, especially for long-distance transmission, the sampling rate of the ADCs (usually obtained from clock recovery) cannot perfectly synchronize the data rate of the transmitted signal. As a result, the sampling phase may vary as time and would not be always at the centre of the eye diagram. Hybrid full-field EDC is promising to enhance the tolerance to such sampling phase drifting and greatly relax the requirement for the ADCs and clock recovery.

In one embodiment, the hybrid full-field EDC based on adaptive FFE using the LMS algorithm requires a self-tuned bias parameter to improve the performance and adaptive capability.

In one embodiment the invention provides means for using a low-pass or band-pass filter with a transfer function of $H(\omega)\sim 1/(j\omega)$ for large $\omega$ (>several GHz) to reconstruct the optical phase. Generally, a band-pass filter with $H(\omega)\sim 0$ for $\omega=0$ would perform better than a low-pass filter. Phase estimation can also be achieved by cascading a high-pass filter and an integrator. In the version of analogue implementation, phase estimation is achieved by a low-pass/band-pass filter plus a phase modulator, or a high-pass filter plus a frequency modulator. The transfer function of the filter should be optimized to achieve high-quality phase reconstruction and improve the performance of said signals. One example of the low-pass filter is 1st order RC circuit of $1/(1+j\omega RC)$.

In one embodiment, the hybrid full-field EDC, in a digital implementation, comprises an implementation of field calculation using multipliers.

In one embodiment the impairments comprise one or more of the following transmission impairments: chromatic dispersion (CD), polarization mode dispersion (PMD), and filtering effects in the channel.

In one embodiment the optical network transmits 10Gbit/s OOK signal greater than distance of 500km.

In one embodiment the intensity and instantaneous frequency of the distorted signal are detected by a direct detector and a balanced detector to provide said two detected signals, or by a single balanced detector with additional signal processing to extract the intensity and instantaneous frequency.

In one embodiment, the misalignment of the AMZI phase can be compensated by an adaptive algorithm. Alternatively, the adaptive algorithm can generate a feedback signal to control the AMZI directly for phase optimization.

It will be appreciated the present invention basically provides an architecture and method to compensate system impairments, including CD, PMD, filtering in optical networks, and sampling phase misalignment, using a hybrid full-field EDC comprising a cost-effective dispersive transmission line and a fast-adaptive full-field EDC. It also provides adaptive algorithms for automatic optimization of the system parameters or equalization of the impairments arising from improper setting of these parameters, including scaling factor and AMZI phase. The present invention also provides the circuit implementation of field calculation and phase estimation in a way of easy implementation and optimum performance. The present invention can not only significantly enhance the transmission reach at low cost but also handle the frequently changed or unknown system impairments, for example varied residual CD arising from change of transmission paths in MANs, PMD which can dynamically change as time in a scale of ms, gain imbalance between the intensity and instantaneous frequency paths that depends on path re-routing, varied sampling phase that is severe especially for long-distance transmission, AMZI phase misalignment varying as temperature changes, and narrowband filtering to increase the spectral efficiency in the optical network.

Electrical signal processing for impairment compensation in optical communication systems has attracted much interest recently due to advance of high-speed IC processor, e.g. 30~56Gsamples/s ADCs, extendable to higher sampling rate in interleaving mode. Compared to commercial DCF in the existing optical networks, EDC is flexible, cost-effective, and easy for integration in transmitters or receivers.

Full-field EDC features better compensation performance compared to conventional DD EDC as it benefits from the knowledge of the recovered phase information, and also better cost effectiveness compared to the coherent-detection based EDC by avoiding complicated phase and polarization tracking or recovery.

Full-field EDC using a dispersive transmission line has been demonstrated to achieve 500km BT Ireland's field-installed SMF transmission without any in-line optical dispersion compensation. However, dispersive transmission line has to be matched to particular CD encountered in the transmission and is inflexible for adaptive CD compensation. Furthermore, dispersive transmission line fails to compensate other impairments such as varied PMD, and lacks the adaptive capability for system optimization. Hybrid full-field EDC employs a cost-effective dispersive transmission line followed by a fast-adaptive full-field EDC. The dispersive transmission line can achieve cost-effective long-distance CD compensation without the need for complicated algorithms using the system and method of the present invention.

In the context of utilising the present invention fast-adaptive full-field EDC can further improve the performance and significantly enhance the residual CD tolerance range. Furthermore, fast-adaptive full-field EDC compensate ISI regardless of its sources using adaptive algorithms, and so can also compensate other impairments such as PMD (prominent for distance beyond 500km) and ISI from narrow-band filtering to enable cost-effective, long-distance and flexible optical transmissions. The fast-adaptive algorithm can also adaptively control the system parameters to facilitate the system optimization, such as the optimization of the scaling factor to compensate the gain imbalance between the received intensity and instantaneous frequency paths. The fast-adaptive EDC can also increase the robustness of the system to the misalignment of the sampling phase. The complexity of fast-adaptive full-field EDC is related to the memory length of the channel and has been greatly reduced by the dispersive transmission line.

In another embodiment there is provided a method for compensating impairments in an optical communication network to optimize system parameters, using electronic dispersion compensation (EDC), comprising the steps of:

receiving two signals, representing amplitude and instantaneous frequency, and performing a full-field reconstruction of said signals;
providing a coarse CD compensation of said reconstructed signals using a dispersive transmission line circuit; and
providing a fine impairment compensation of said reconstructed signals, using an EDC circuit and adaptively optimize system parameters.

## Brief Description of the Drawings

The invention will be more clearly understood from the following description of an embodiment thereof, given by way of example only, with reference to the accompanying drawings, in which:-

Figure 1 illustrates a prior art system for a transmitter-side EDC;
Figure 2 illustrates a prior art system for a DD MLSE system;
Figure 3 illustrates a prior art system for coherent detection EDC;

Figure 4 illustrates a prior art implementation of a full-field EDC system;

Figure 5 illustrates another prior art implementation of a full-field EDC system;

Figure 6 illustrates a prior art full-field EDC system with a fixed dispersive transmission line;

Figure 7 illustrates an embodiment of the system according to a first aspect of the invention;

Figure 8 illustrates an example of hybrid full-field EDC comprising a digitally implemented dispersive transmission line and a fast adaptive FFE according to the present invention;

Figure 9 depicts the performance to achieve BER of $5 \times 10^{-4}$ as a function of residual fiber length at 2000km;

Figure 10 depicts the number of bit errors as a function of received bit number to illustrate the adaptive compensation of hybrid full-field EDC;

Figure 11 shows the performance versus memory length of fast-adaptive FFE at 2000km when only fast-adaptive FFE without a dispersive transmission line was used for impairment compensation;

Figure 12 shows an adaptive algorithm of hybrid full-field EDC to enhance the robustness to the gain imbalance between the intensity and the instantaneous frequency paths;

Figure 13 shows the performance as a function of the misalignment of the sampling phase using dispersive transmission line and hybrid full-field EDC;

Figure 14 shows an adaptive algorithm in hybrid full-field EDC to compensate AMZI phase misalignment;

Figure 15 illustrates another example of hybrid full-field EDC comprising an analogue dispersive transmission line and a full-field MLSE at two samples per bit according to the invention;

Figure 16 illustrates the required OSNR to achieve BER of $5 \times 10^{-4}$ versus fiber length for full-field MLSE with various states and hybrid full-field EDC;

Figure 17 is an example graph illustrating required OSNR to achieve BER of $5 \times 10^{-4}$ for hybrid full-field EDC without and with the optimization of the filter response in phase estimation;

Figure 18 is an example graph illustrating required OSNR to achieve BER of $5 \times 10^{-4}$ versus residual fibre length at 2000km using hybrid full-field EDC;

Figure 19 shows the feedback information of the adaptive algorithm to control the phase of an AMZI; and

Figure 20 illustrates another implementation of the system according to the present invention.


## Detailed Description of the Drawings

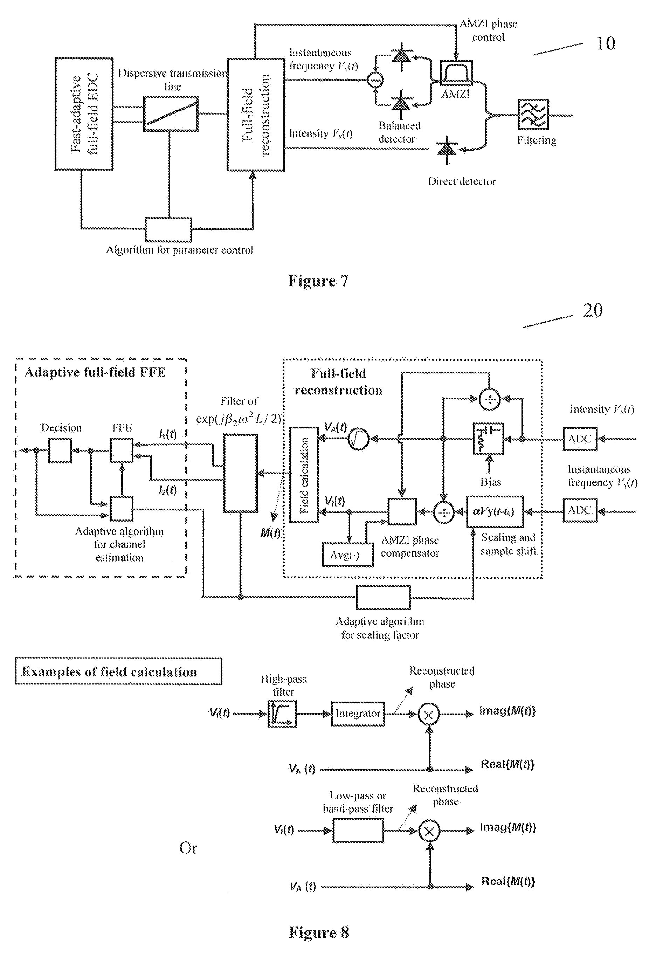

Referring now to the drawings, Fig. 7 illustrates a hybrid full-field EDC technique, indicated generally by the reference numeral 10, comprising a cost-effective dispersive transmission line for coarse impairment compensation and fast-adaptive full-field EDC for fine-trimming of the impairments, according to the invention.

At the receiver, the intensity and instantaneous frequency of the distorted signal are detected by a direct detector and a balanced detector respectively (or by using the configuration of Fig. 4). The two detected signals (representing intensity and instantaneous frequency) are used for full optical-field reconstruction. An daptive controlling algorithm is used in the full-field reconstruction module to optimize the phase of an AMZI. The recovered full optical field is fed into a fixed dispersive transmission line, which can roughly compensate CD in the transmission. The two outputs of the dispersive transmission line are then fed into a self-adaptive full-field EDC, which will perform fine-trimming of the residual CD and greatly relax the limitation from PMD. Furthermore, the system can also enable the use of narrowband filtering to increase the spectral efficiency while leaving ISI caused by narrowband filtering to be compensated by the fast-adaptive full-field EDC. The fast adaptive full-field EDC also increases the robustness to the misalignment of the sampling phase and relaxes the requirements of the ADCs and clock recovery in synchronization with the signal data rate. Full-field EDC can also incorporate adaptive algorithms to optimize the system parameters in the full-field reconstruction, as shown in Fig.7. Note that Fig. 7 illustrates that the adaptive full-field EDC is used to feed back information to the field reconstruction module for parameter controlling. However, it is also possible that the imperfect system parameters are not controlled in the full-field reconstruction, with the resultant distortions compensated in the fast-adaptive full-field EDC.

The fast-adaptive full-field EDC can be full-field FFE/DFE, or full-field MLSE etc. Full-field FFE/DFE and full-field MLSE would exhibit better compensation performance compared to conventional DD FFE/DFE and DD MLSE due to knowledge of phase information. However, their complexity increases dramatically as CD value increases. A static dispersive transmission line can effectively reduce the ISI memory length and therefore the complexity of the fast-adaptive EDC.

Fig. 8 shows a detailed implementation of hybrid full-field EDC, indicated generally by the reference numeral 20, comprising a dispersive transmission line and a fast adaptive full-field FFE. The optical configuration is based on Fig. 5 (or Fig. 7). Proper modification on the implementation of full-field reconstruction should be applied when the configuration of Fig. 4 is used. An example of the low-pass filter is $1/(1+j\omega RC)$ (corresponding to $1^{st}$ order RC circuit in the analogue version) but not limited to this. It should has the transfer function $\sim 1/(j\omega)$ when $\omega$ is large (>several GHz).

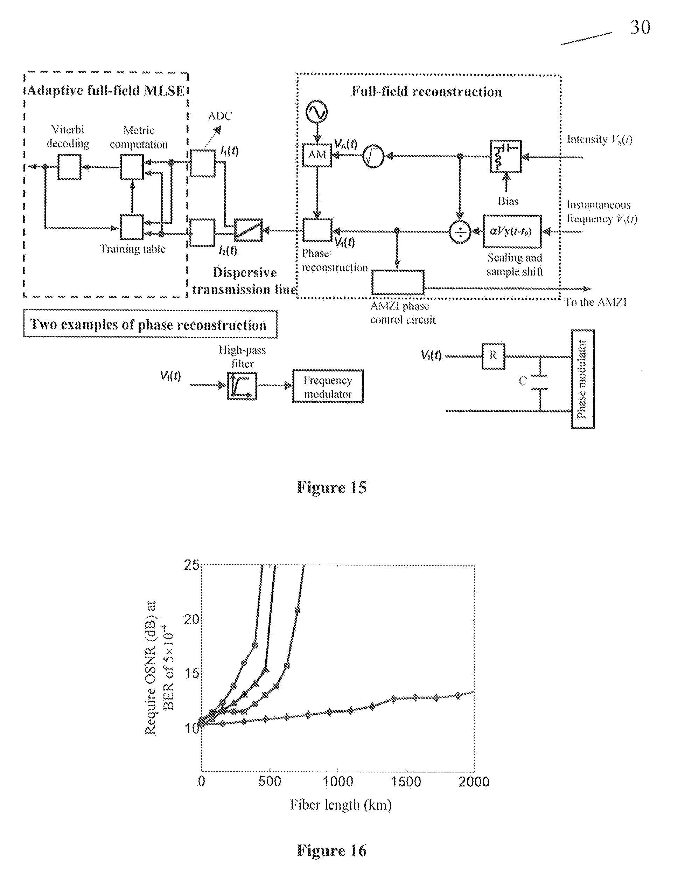

In one embodiment, full-field reconstruction, dispersive transmission line, and fast-adaptive full-field EDC are all digitally implemented. The sampling rate and the quantization resolution of the ADCs for the $V_x(t)$ and $V_y(t)$ signals are important, the impact of which on the system performance depend on the fiber length. Generally, four or more samples per bit are required to induce negligible performance penalty at 2000km, as will be shown later. The details with respect to the bias added to the intensity $V_x(t)$, the time shifting, and the scaling factor required to correct for the gain imbalance for the $V_x(t)$ and $V_y(t)$ paths can be found in the paper, J. Zhao, M.E. McCarthy, P. Gunning, A.D. Ellis, "Mitigation of pattern sensitivity in full-field electronic dispersion compensation", IEEE Photo. Technol. Lett., 21, 48-50, 2009. Note that in the previous work, all these parameters were manually tuned, which were time consuming and non-optimal. Furthermore, these parameters may vary as time or change when the CD value changes or the path is re-routed. In the present invention, the scaling factor is self-controlled to an optimal value by an adaptive algorithm, or the proposed adaptive algorithm can be incorporated in the fast-adaptive EDC to equalize the distortion arising from the improper setting of the scaling factor. A phase compensator is used to adaptively compensate the differential phase misalignment of the AMZI. The phase of the AMZI should be tuned to be exactly $\pi/2$, but in practice it may drift as temperature changes. The AMZI phase misalignment can be estimated by $avg(V_f(t))/avg(V_x(t)/(V_x(t)+bias))$ (where avg $(x)$ is the mean of $x$) and the distortion of the instantaneous frequency $V_f(t)$ can be alleviated by removing the term that is added to $V_f(t)$ by the AMZI phase misalignment. Note that the phase of AMZI is usually slow-varying so this adaptive mitigation scheme would not increase the complexity significantly. Also note that AMZI phase misalignment can also be compensated by controlling the AMZI directly using the adaptive algorithm, instead of being compensated by an additional phase compensator module, as will be shown in Fig. 15.

Reconstruction of the optical phase, $V_p(t)$, is achieved by using a low-pass or band-pass filter with a transfer function of $H(\omega)\sim1/(j\omega)$ for large $\omega$ (>several GHz). Generally, a band-pass filter with $H(\omega\sim0$ for $\omega=0$ would perform better than a low-pass filter. Alternatively, optical phase reconstruction can also be attained by cascading a high-pass filter and an integrator, and in this case, the bandwidth of high-pass filter is required to be optimized to achieve high-quality phase estimation. Note that in this example, full-field reconstruction is digitally implemented.

In an analogue implementation, phase estimation can be implemented by passing $V_f(t)$ through a low-pass or band-pass filter followed by a phase modulator, as will be shown later. The field calculation for the estimation is typically

$$V_A(t)e^{j\int V_f(t)dt},$$ but the present invention utilises the equation:

$$V_A(t)e^{j\int V_f(t)dt} \approx V_A(t)(1+j\int V_f(t)dt - (\int V_f(t)dt)^2/2... \approx V_A(t)(1+j\int V_f(t)dt)$$

This estimation induces negligible performance penalty while greatly relaxing the implementation complexity, as shown in Fig. 8.

It will be appreciated that in full-field reconstruction, the division may be omitted to reduce the complexity but at the expense of a certain amount of performance degradation. Practical design depends on a balance between performance and cost.

The dispersive transmission line is implemented using FFT or a FIR filter:

$$\psi_I(\omega) = \psi_M(\omega) \cdot \exp(j\beta_2\omega^2 L)$$

where $\Psi_I(\omega)$ and $\Psi_M(\omega)$ are the spectra of $I(t)=(I_1(t)+j\cdot I_2(t))$ and $M(t)$ respectively. $\exp(j\beta_2\omega^2L/2)$ has the inverse transfer function of CD, whose value is preset.

Referring now to the operation of the fine tuning aspect of the invention, full-field FFE is used as an example of the fast-adaptive full-field EDC part. Least mean square algorithm is used for channel estimation in the figure but other algorithms, e.g. RLS, can also be used. Assuming that $a_n$, and $f_n$ being the nth estimated signal data and the FFE coefficients:

$$a_n = \sum_{k=-N}^{N} I_{n-k}f_k + bias$$

where $f_k$ and *bias* are adaptively updated using mean square error criteria. $(2N+1)$ is the tap number and equals $(m+1)$

×Samples per bit, $m$ is the memory length. The adaptive bias greatly influences the adaptive capability and the performance of the hybrid full-field EDC, and is updated by:

$$bias^k = bias^{k-1} + \Delta \cdot (b_k - a_k) \cdot$$

where $\Delta$ and $b_k$ are the parameter to control the update speed and the $k^{th}$ transmitted logic data respectively.

The misalignment of the sampling phase, $t_0$, can be viewed as a filter with the transfer function of $e^{-j\omega t_O}$, where $t_0$ is unknown and can change as time (in particular, in the case that the sampling rate is not synchronous with the signal data rate). However, fast-adaptive full-field EDC can adaptively compensate such distortion by trimming the transfer function of the FFE.

Fast-adaptive full-field EDC can also incorporate the adaptive algorithm for controlling the scaling factor in full-field reconstruction to compensate the gain imbalance between the two detected signal paths:

$$\alpha^k = \alpha^{k-1} + \Delta \cdot (b_k - a_k) \cdot I_p$$

where $I_p(t)$ is the resultant signal of $j \cdot V_p(t)$ after compensation and has the form in the frequency domain:

$$\psi_{I_p}(\omega) = \psi_{V_p}(\omega) \cdot \exp(j\beta_2\omega^2 L) \cdot F(\omega)$$

where $\Psi_{I_p}(\omega)$ and $\Psi_{V_p}(\omega)$ are the spectra of $I_p(t)$ and $j \cdot V_p(t)$ respectively. $F(\omega)$ is the transfer function of the fast-adaptive FFE.

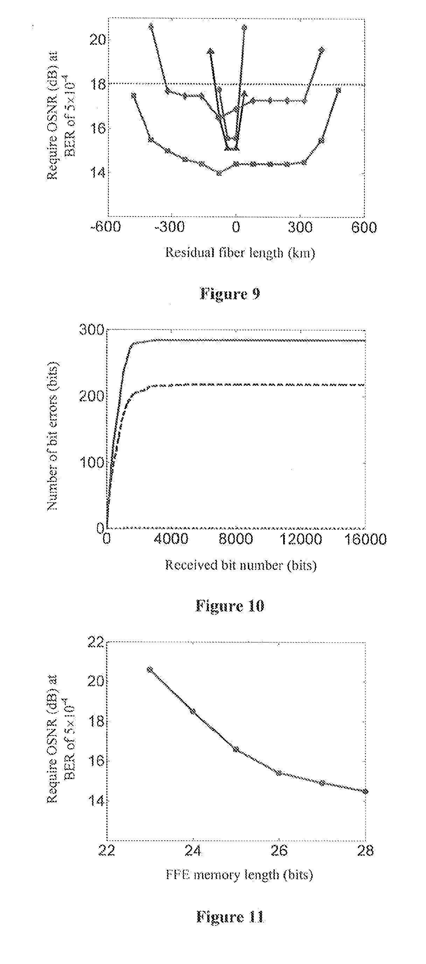

Figure 9 shows the performance as a function of residual fiber length at 2000km by using dispersive transmission line only using 5 samples per bit ADCs (shown as circles), dispersive transmission line plus DD FFE at 5 samples per bit (shown as triangles), dispersive transmission line plus full-field FFE at 5 samples per bit (shown as squares), and dispersive transmission line plus full-field FFE using 2 samples per bit ADCs (shown as diamonds). The dispersive transmission line was set to fully compensate 2000km CD. Least mean square algorithm was used for adaptive channel estimation. The memory length of fast-adaptive DD FFE and full-field FFE was 4 bits. The quantization resolution was assumed to be infinity. Thermal noise and fiber nonlinearity were included, and the time delay of the AMZI and the fiber link configuration were optimized to suppress these effects. PMD effect was not included.

Fig. 9 verifies the effectiveness of the full-field EDC for residual impairment compensation. From the figure, it is shown that dispersive transmission line only or dispersive transmission line plus DD FFE exhibited very limited compensation capability for residual CD, with the CD tolerance range of only around 100km at 18dB OSNR. By using dispersive transmission line plus full-field FFE (shown as squares), the residual CD tolerance can be greatly increased to approximately from -500km to 500km (1500km-2500km) at 18dB OSNR. At zero residual fiber length, around 1.2dB performance improvement of hybrid full-field EDC compared to the dispersive transmission line only was due to the fact that adaptive full-field FFE can compensate unknown imperfect system response, which, however, cannot be included by the dispersive transmission line. From the figure, we can also find that reducing the sampling rate to two samples per bit would introduce around 3dB performance penalty, so practical implementation depends on the trade-off between the performance and complexity. Note that phase estimation in the figure was implemented by cascading a high-pass filter and an integrator. When a low-pass filter was used for phase reconstruction, the penalty arising from two samples per bit would be reduced to 1.5dB. Also note that in the full-field FFE, the adaptive bias was incorporated in the LMS algorithm. Otherwise, although not explicitly depicted in the figure, the required OSNR for 0km residual fiber length using dispersive transmission line plus full-field FFE would be larger than 20dB.

Fig. 10 shows the adaptive capability of the hybrid full-field EDC at 2000km when the residual fiber length is 400km (shown as solid), 200km (shown as dashed) and 0km (shown as dotted) at 16dB OSNR. The memory length of adaptive full-field FFE was 4 bits and the dispersive transmission line was set to fully compensate 2000km CD. It can be seen that even when the preset dispersion value of the dispersive transmission line did not match that of the CD in the fiber link, the residual CD could be adaptively trimmed by the self-adaptive full-field FFE and the bit error rate, after a certain amount of adaptive time, became steady. In this example using full-field FFE with the LMS algorithm, the training bit number was less than 4,000.

As discussed above, the fast-adaptive full-field EDC structures would exhibit better performance compared to DD EDC, but also has the complexity increased dramatically as CD. Fig. 11 shows the required OSNR to achieve BER

of $5\times10^{-4}$ at 2000km when only adaptive full-field FFE at 5 samples per bit is used. It can be seen that at least 27-bit memory length ($\sim$135 taps) was required to avoid large performance degradation. Such memory length would be increased to around 32 bits if two samples per bit are employed. As a result, the associated adaptive algorithm to implement this FFE would be complicated. A hybrid full-field EDC is essential to achieve low-cost long-distance transmission while maintaining the fast-adaptive compensation capability.

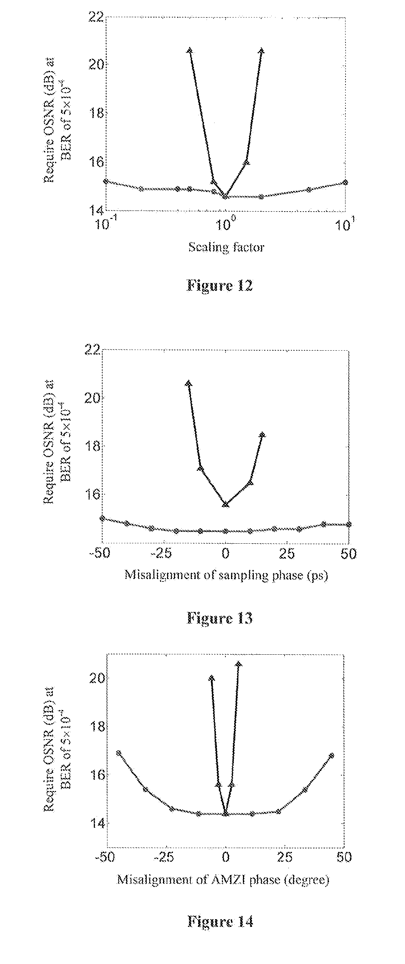

Fig. 12 depicts the performance of the hybrid full-field EDC as a function of the scaling factor without (shown as triangles) and with (shown as circles) the adaptive algorithm to optimize the scaling factor. In the figure, the scaling factor was normalized, with one representing the balanced gain between the two detected signal paths.

It can be appreciated that the proposed adaptive algorithm could greatly enhance the dynamic range of the scaling factor, and in the range of [0.1 10], the OSNR penalty was less than 1dB.

Fig. 13 shows the required OSNR versus the misalignment of the sampling phase using dispersive transmission line only (shown as triangles) and hybrid full-field EDC (shown as circles). For conventional dispersive transmission line, the performance was very sensitive to the sampling phase. However, when using hybrid full-field EDC, less than 1dB penalty was observed for the sampling phase of [-50ps 50ps], which would greatly relax the requirement for the sampling rate of the ADCs, clock recovery, etc.

Fig. 14 shows the performance of the proposed adaptive algorithm to compensate the phase misalignment of the AMZI. Circles and triangles represent the cases with and without the compensation algorithm. It can be clearly seen that the algorithm can effectively improve the performance tolerance to the AMZI phase misalignment.

Fig. 15 shows another detailed implementation using hybrid full-field EDC, indicated generally by the reference numeral 30, comprising an analogue dispersive transmission line and a digitally implemented full-field MLSE at two samples per bit.

In this example, different from that in Fig. 8, the phase misalignment of AMZI is not compensated by an additional compensator, but eliminated by a circuit that feeds the misalignment information back to the AMZI for direct phase control. However, the principle is similar to that in Fig. 8. Optical phase reconstruction may be achieved by feeding the recovered instantaneous frequency into a high-pass filter and then a frequency modulator. It can also be attained by passing $V_f(t)$ through a low-pass or band-pass filter (should satisfy $H(\omega)\sim1/(j\omega)$ for large $\omega$), e.g. a $1^{st}$ order RC circuit, followed by a phase modulator, where the 3dB bandwidth of the RC circuit is around 1GHz (exact value depends on the fiber length and system parameters). Although $1^{st}$ order RC circuit with the transfer function of $1/(1+j\omega RC)$ is shown in the figure, higher order circuit with a transfer function $H(\omega)$ of $H(\omega)\sim1/(j\omega)$ for large $\omega$ and $H(\omega)\sim0$ for $\omega=0$, would also work.

The dispersive transmission line has the inverse transfer function of CD, whose value is preset. Full-field MLSE is used as the fast-adaptive full-field EDC part. The outputs ($I_1(t)$ and $I_2(t)$) of the dispersive transmission line may be the real and imaginary parts ($I_{real}(t)$ and $I_{imag}(t)$), amplitude and phase parts ($I_{amp}(t)$ and $I_{phase}(t)$), or other transform of the full field. $I_1(t)$ and $I_2(t)$ are sampled by ADCs with one or two samples per bit (two samples are preferred for better performance). The full-field MLSE, different from DD MLSE, exploits the information of the two inputs simultaneously in both metric computation and channel training. The metric $PM(b_n)$ of full-field MLSE is:

$$PM(b_n) = PM(b_{n-1}) - \sum_i \log(p(I_1(t_i), I_2(t_i) \mid b_{n-m},...b_n))$$

where $i\in \{n\ n+1/2\}$ for two samples per bit. $b_n$ and $p(I_1(t_i), I_2(t_i) \mid b_{n-m},... ,b_n)$ are the $n^{th}$ OOK logical data and the two-dimensional joint probability of the recovered full optical field at time $t_i$ given the logical data $b_{n-m},...,b_n$, respectively. $m$ is the memory length. The lookup table in full-field MLSE can be established and updated by using nonparametric histogram, parametric method, blind channel estimation etc. In the histogram method, the histogram is built up to numerically estimate $p(I_1(t_i), I_2(t_i) \mid b_{n-m},....,b_n)$ for all combinations of $(b_{n-m},...,b_n)$ and updated by: $p^{(L)}(I_1(t_i), I_2(t_i) \mid b_{n-m},..., b_n)=(1-\lambda)\, p^{(L-1)}(I_1(t_i), I_2(t_i) \mid b_{n-m},....,b_n)+\lambda q^{(L)}(I_1(t_i), I_2(t_i) \mid b_{n-m},....,b_n)$, where $q^{(L)}(I_1(t_i), I_2(t_i) \mid b_{n-m},....,b_n)$ is the histogram of the $L^{th}$ block of data, and $\lambda$ is a parameter to control the speed of the update. Note that the histogram method may need a long training sequence. Therefore, the parametric method can be used to setup the lookup table and the histogram method can be used for updating. The probability of $I_1(t_i)$, $I_2(t_i)$ in the system is theoretically estimated, $p(I_1(t_i), I_2(t_i) \mid b_{n-m},....,b_n,\alpha_1, \alpha_2....\alpha_q)$, where $\alpha_1, \alpha_2....\alpha_q$ are the parameters of the probability (e.g. noise density, second-order moment etc) and determined by the training sequence. Note that $p(I_1(t_i), I_2(t_i) \mid b_{n-m},....,b_n, \alpha_1, \alpha_2....\alpha_q)$ should be obtained for all combinations of $(b_{n-m},....,b_n)$. When the fiber nonlinearity effect is small, $p(I_1(t_i), I_2(t_i) \mid b_{n-m},....,b_n, \alpha_1, \alpha_2....\alpha_q)= p(I_1(t_i), I_2(t_i) \mid e_m b_{n-m}+...e_0 b_n, \alpha_1, \alpha_2....\alpha_q)$, where the linear ISI channel characteristics $e_m b_{n-m}+...e_0 b_n$ may be estimated using LMS or RLS algorithm. The parametric method usually requires shorter training sequence length.

Larger $m$ is capable to achieve longer transmission reach but at the expense of exponentially increased implementation complexity. Fig. 16 illustrates the required OSNR to achieve BER of $5\times10^{-4}$ for 4-state DD MLSE (shown as circles), 4-state full-field MLSE (shown as triangles), 16-state full-field MLSE (shown as squares), and hybrid full-field EDC comprising a dispersive transmission line and a 16-state full-field MLSE (shown as diamonds).

It is shown that 4-state full-field MLSE had the capability to compensate ~400km CD, 50% better than DD MLSE owing to knowledge of the recovered phase information. Such complexity would increase to 16 states for 600km CD compensation or even higher for longer distance. In contrast, by using hybrid EDC comprising a dispersive transmission line and a 16-state full-field MLSE, the transmission reach was extended to 2000km with the required OSNR less than 15dB. In the figure, the two inputs of the full-field MLSE were $I_{real}(t)$ and $I_{imag}(t)$.

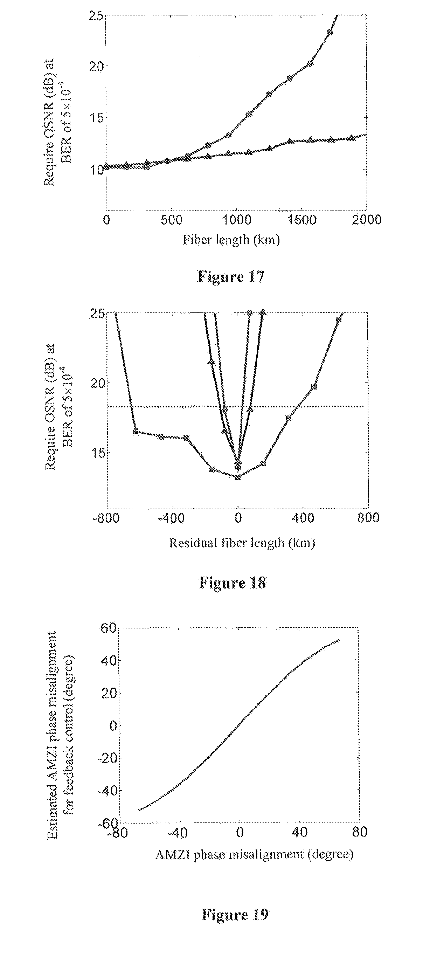

Fig. 17 illustrates the required OSNR to achieve BER of $5\times10^{-4}$ for hybrid full-field EDC comprising a dispersive transmission line and a 16-state full-field MLSE using only a frequency modulator for phase reconstruction (shown as circles) and using a 0.85GHz high-pass filter followed by a frequency modulator (shown as triangles).

As described above, it is essential to achieve high-quality phase estimation in hybrid full-field EDC by optimizing the system response, which was confirmed by Fig. 17. Similarly, when using the configuration of RC circuit + phase modulator, the optimization of the bandwidth of the RC circuit is also crucial.

Fig. 18 illustrates the required OSNR to achieve BER of $5\times10^{-4}$ versus residual fibre length using dispersive transmission line + direct detection (shown as circles), dispersive transmission line + 16-state DD MLSE (shown as triangles) (memory length of 4), and dispersive transmission line + 16-state full-field MLSE (shown as squares). The dispersive transmission line was set to fully compensate CD of 2000km. The lookup table was obtained using nonparametric histogram method. From the figure, it is shown that dispersive transmission line alone or dispersive transmission line + 16-state DD MLSE exhibited very limited compensation capability for residual CD, with the CD tolerance range of 1900km-2100km. By using dispersive transmission line + full-field MLSE (shown as squares), however, the residual CD tolerance was approximately from -600km to 400km (1400km-2400km) at 18dB OSNR. Note that different from Fig. 8, the full-field reconstruction and the dispersive transmission line parts were assumed to be analogue devices (no sampling rate and quantization resolution issues), and DD and full-field MLSE operated at two samples per bit and 5-bit resolution. Thermal noise and fiber nonlinearity were not included in this simulation.

Fig.'s 16-18 show results under OSNR limited operation region, without taking account of fibre nonlinearity and thermal noise, representing the maximum achievable performance (Fig. 9-14 included these effects). When these impairments are taken into consideration, some system optimizations are required, including, for example, an AMZI with a larger time delay to enhance the robustness to thermal noise, and proper design of the fibre link configuration to suppress the fibre nonlinearity effect.

Fig. 19 shows the estimated phase misalignment of the AMZI from the adaptive control circuit for feedback to control the phase of the AMZI.

The joint probability in the previous metric may be replaced by the multiplication of the individual probability of $I_1(t)$ and $I_2(t)$. Assuming that the inputs of full-field MLSE are the real and imaginary parts of the optical field, the metric, $PM(b_n)$, can also be:

$$PM(b_n) = PM(b_{n-1}) - \sum_i \log( p(I_{real}(t_i) \mid b_{n-m},...b_n) p(I_{imag}(t_i) \mid b_{n-m},...b_n))$$

This metric can significantly reduce the implementation complexity from $2^{2q+m+2}$ to $2^{q+m+3}$ while with negligible performance penalty under proper system optimization.

Although the figures focus on residual CD compensation, hybrid full-field EDC can also use dispersive transmission line to compensate the most important impairment, CD, and employ fast adaptive full-field EDC to mitigate PMD which would become prominent for distance beyond 500km, and filtering effects in the transmission system.

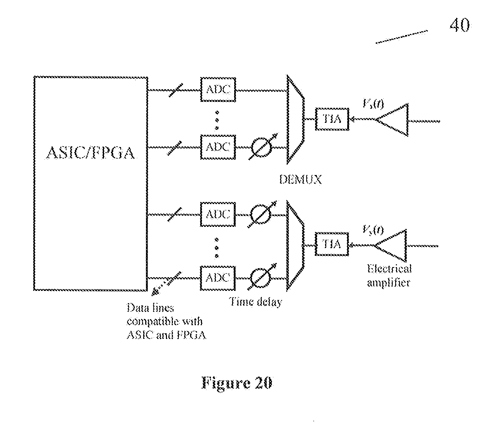

Another example of implementation of the technique is shown in Fig. 20, indicated generally by the reference numeral 40. The input signals are sampled by commercial ADCs. Depending on the maximum speed of the ADCs and the required sampling rate of the technique, several ADCs may be interleaved with the output consisting of data lines compatible with ASIC and FPGAs.

The embodiments in the invention described with reference to the drawings comprise a computer apparatus and/or processes performed in a computer apparatus in order to control system and method for use in a communications network. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

## EP 2 271 006 A1

**Claims**

1. A system, for an optical communication network to compensate impairments in the network to optimize system parameters, using electronic dispersion compensation (EDC) comprising:

   means for receiving two signals, representing amplitude and instantaneous frequency, and performing a full-field reconstruction of said signals;
   a dispersive transmission line circuit to provide a coarse CD compensation of said reconstructed signals; and
   an EDC circuit to provide a fine impairment compensation of said reconstructed signals, and adaptively optimize system parameters.

2. The system as claimed in the preceding claim comprising means for generating the instantaneous frequency using an asymmetric Mach-Zehnder interferometer (AMZI).

3. The system as claimed in claim 2 wherein an adaptive algorithm module provides control or compensation for any phase misalignment of the AMZI.

4. The system as claimed in claims 1 to 3 comprising calculation means to provide a full-field reconstruction of said instantaneous frequency signal and said amplitude signal using filtering means and multiplication means.

5. The system as claimed in any preceding claim wherein the adaptive algorithm module provides control or compensation for gain imbalance between the two signals

6. The system of any preceding claim wherein the amplitude and instantaneous frequency of a distorted signal are detected by a direct detector and a balanced detector; and additional signal processing means to extract the amplitude and the frequency to provide said two received signals.

7. The system of any preceding claim wherein the amplitude and instantaneous frequency of the distorted signal are detected by a single balanced detector and additional signal processing to extract the amplitude and the frequency to provide said two signals.

8. The system of any preceding claim wherein the dispersive transmission line comprises a filter means with a transfer function $\exp(j\beta_2\omega^2 L/2)$ to provide the coarse CD compensation of said reconstructed signals, wherein $\beta_2 L$ is an approximate value based on a prior known value.

9. The system as claimed in any preceding claim wherein the EDC circuit comprises means for self-adaptively tuning to perform fine-trimming of CD and/or other transmission impairments in said reconstructed signals.

10. The system as claimed in any preceding claim wherein the EDC circuit comprises a full-field FFE/DFE or full-field MLSE circuit.

11. The system of claim 9 or 10 wherein an associated adaptive algorithm is provided for channel estimation to said adaptive full-field EDC circuit.

12. The system as claimed in any preceding claim wherein the EDC circuit comprises a reduced memory length when combining with the dispersive transmission line circuit.

13. The system as claimed in any preceding claim wherein the adaptive full-field EDC comprises a self-adaptive bias parameter to improve the performance and adaptive capability of said system.

14. The system of any preceding claim comprises one or more of the following transmission impairments: CD, PMD, filtering effects in the channel.

15. A receiver, for use in an optical communication network, comprising the system of any preceding claim.

Figure 1

Figure 2

Figure 3

EP 2 271 006 A1

PRIOR ART

Figure 4

PRIOR ART

Figure 5

PRIOR ART - Figure 6

13

**Figure 7**

**Figure 8**

**Figure 9**

**Figure 10**

**Figure 11**

Figure 12

Figure 13

Figure 14

Figure 15

Figure 16

Figure 17

Figure 18

Figure 19

Figure 20

EUROPEAN SEARCH REPORT

Application Number

EP 09 16 3524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHAO J ET AL: "Chromatic dispersion compensation using full optical-field maximum likelihood sequence estimation" OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467773 ISBN: 978-1-4244-2606-5 * page 2; figure 1 * | 1-15 | INV. H04B10/158 H04L25/03 |
| Y | US 2006/013597 A1 (CRIVELLI DIEGO E [AR] ET AL) 19 January 2006 (2006-01-19) * paragraph [0005] * * paragraph [0025] * * paragraph [0062] - paragraph [0066]; figure 6 * | 1-15 | |
| A | US 2007/064845 A1 (PHANSE ABHIJIT [US] ET AL) 22 March 2007 (2007-03-22) * abstract; figure 5a * | 1-15 | TECHNICAL FIELDS SEARCHED (IPC) H04B H04L |

The present search report has been drawn up for all claims

| Place of search | Date of completion of the search | Examiner |
|---|---|---|
| Munich | 24 November 2009 | Phillips, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 271 006 A1**

## ANNEX TO THE EUROPEAN SEARCH REPORT
## ON EUROPEAN PATENT APPLICATION NO.

EP 09 16 3524

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2009

| Patent document cited in search report | Publication date | Patent family member(s) | Publication date |
|---|---|---|---|
| US 2006013597 A1 | 19-01-2006 | NONE | |
| US 2007064845 A1 | 22-03-2007 | NONE | |

For more details about this annex : see Official Journal of the European Patent Office, No. 12/82

## REFERENCES CITED IN THE DESCRIPTION

**Patent documents cited in the description**

- US 7382984 B, McNicol
- US 7184478 B, Popescu
- US 7266310 B, Savory
- WO 2006131904 PCT

**Non-patent literature cited in the description**

- **M. Nakamura ; K. Murata ; M. Tokumitsu.** Advances in 40G electronic equalizers. *Proc. Optical Fiber Communication Conference (OFC),* 2007
- **H. Jiang ; R. Saunders.** Advances in SiGe ICs for 40Gb/s signal equalizers. *Proc. Optical Fiber Communication Conference (OFC),* 2006
- **A. Farbert ; S. Langenbach ; N. Stojanovic ; C. Dorschky ; T. Kupfer ; C. Schulien ; J.-P. Elbers ; H. Wernz ; H. Griesser ; C. Glingener.** Performance of a 10.7 Gb/s receiver with digital equaliser using maximum likelihood sequence estimation. *European Conference on Optical Communication (ECOC),* 2004
- **G. Bosco ; P. Poggiolini.** Long-distance effectiveness of MLSE IMDD receivers. *IEEE Photo. Technol. Lett.,* 2006, vol. 18, 1037-1039
- **M. G. Taylor.** Coherent detection for optical communications using digital signal processing. *Proc. Optical Fiber Communication Conference (OFC),* 2007
- **J. Zhao ; M.E. McCarthy ; P. Gunning ; A.D. Ellis.** Mitigation of pattern sensitivity in full-field electronic dispersion compensation. *IEEE Photo. Technol. Lett.,* 2009, vol. 21, 48-50